Europäisches Patentamt

(19) European Patent Office

Office européen des brevets

(11) Publication number: 0 240 342
A2

# (12) EUROPEAN PATENT APPLICATION

(21) Application number: 87302852.6

(22) Date of filing: 01.04.87

(51) Int. Cl.⁴: **B 01 D 39/16**
C 08 J 9/00, B 29 C 67/20

(30) Priority: 03.04.86 GB 8608155

(43) Date of publication of application:
07.10.87 Bulletin 87/41

(84) Designated Contracting States:
AT BE CH DE ES FR GB GR IT LI NL SE

(71) Applicant: UNILEVER PLC
Unilever House Blackfriars P.O. Box 68
London EC4P 4BQ (GB)

(84) Designated Contracting States: GB

(71) Applicant: UNILEVER NV
Burgemeester s'Jacobplein 1 P.O. Box 760
NL-3000 DK Rotterdam (NL)

(84) Designated Contracting States:
BE CH DE ES FR GR IT LI NL SE AT

(72) Inventor: Cummins, Phillip Graham
55 Caldy Road
West Kirby Wirral (GB)

Gregory, Donald Peter
14 Evesham Road
Wallasey Merseyside L45 3JR (GB)

Hao, Zia Avenida Marechal Hastimphilo de Moura 338
Portal de Morumbi Edificio Castanheiras
Ap.13 D CEP 05640 Sao Paulo (BR)

Staples, Edwin John
2 Mount Cottages Chorlton
By Backford, Nr Chester CH2 4DE (GB)

(74) Representative: Thomas, Susan Margaret et al
UNILEVER PLC Patents Division P.O. Box 68 Unilever House
London EC4P 4BQ (GB)

(54) Process for preparing a filter body.

(57) A process for preparing a porous polymeric filter body in which a deformable, porous, polymeric body, in which the porosity is in the form of a series of cavities jointed by interconnecting holes constituting a series of pathways through the body, is deformed comprises imparting a deformation to the polymeric body so as to change the dimensions of pathways so as to effect the filtering characteristics of the body with the polymeric body itself retaining the deformation so as to form a substantially rigid filter body. Filter bodies can thus be pre-formed or can be formed in situ to desired filtration characteristics.

EP 0 240 342 A2

Bundesdruckerei Berlin

## Description

## Process for Preparing a Filter Body

This invention is concerned with filtration. More particularly, the invention is concerned with filtration of very fine particles and the modification of porous, polymeric bodies to provide a filter medium which is closely defined with respect to its filtration characteristics.

Over a period of some years, various proposals have been made for the manufacture of porous, polymeric bodies, some of which it is suggested are useful as filters.

For example, GB-A-1 458 203 discloses the preparation of shaped articles with a cellular structure prepared from various unsaturated polyesters and polymerisable monomers which are stated to be capillary active and absorb liquids.

GB-A-1 476 228 describes the preparation of microporous bodies prepared from synthetic, thermoplastics polymers by a process which involves dissolving the polymer at an elevated temperature to form a homogeneous solution and cooling it to initiate liquid phase separation to form a plurality of droplets in the polymeric body to generate a microporous structure on removing the liquid. This product is also suggested as a suitable filter medium.

GB-A-893258 describes the use of porous highly resilient synthetic material such as polyvinyl chloride as a filter insert in which the insert is compressed so as to reduce substatially the size of the pores to enable the pores to retain considerably smaller impurities than in the uncompressed state and on release the pores are enlarged so as to enable cleaning of the pores.

The present invention provides an improved method of modifying porous, polymeric bodies to generate porous, polymeric filters.

According to the present invention there is provided a process for the preparation of a porous, polymeric filter body in which a deformable, porous, polymeric body, in which the porosity is in the form of a series of cavities joined by interconnecting holes consituting a series of pathways through the body, is deformed characterised by imparting a deformation to the polymeric body so as to change the dimensions of the pathways and the polymeric body itself retaining the deformation so as to form a substantially rigid filter body.

Deformation of the polymeric body, preferably compression in one or more directions, reduces the dimensions of the pathways through the body so as to adjust the filtering characteristics of the filter body. As the deformation is effectively permanently imparted to the polymeric body the present process provides a method for producing pre-formed filter bodies of known filtering characteristics. Thus preferably the polymeric body is deformed to a predetermined shape. Examples of suitable shapes are discs, cylinders and sheets.

The polymeric body can alternatively or as well as be deformed to a predetermined porosity size range. The present process can thus provide a substantially rigid filter body of known filtering characteristics. During manufacture of the porous polymeric bodies the detailed control of the porosity of the bodies can thus for example be minimised generating products having variable porosity characteristics which can then be formed into filter bodies by means of the present process allowing fine control of their porosity. In an alternative embodiment however the polymeric body can be deformed immediately prior to use, for example it can be placed in a filter carrier and there for instance compressed.

The deformation can be imparted to the polymeric body with the polymeric body below, at or above its glass transition temperature. Where the polymeric body is below its glass transition temperature and compression type deformation is applied some random fractures of the block polymer may occur. Such fractures however can in a sense be viewed as fault lines and do not necessarily lead to leakage through the filter body. Where the polymeric body is at or above its glass transition temperature whilst a deformation is imparted, the polymeric body is subsequently cooled to below its glass transition temperature whilst constraining the polymeric body in its deformed state.

In a preferred form of the present process the deformable porous polymeric body is a porous homogeneous cross-linked vinyl polymeric block material. In a more preferred form the polymeric body is a porous homogeneous cross-linked vinyl polymeric block material of the type disclosed in US-A-4522953. The material described in US-A-4522953 has an exceptionally high porosity and corresponding low density and comprises a series of pores interlinked by pinhole apertures. The material is formed by vinyl polymerisation of a water-in-oil high internal phase emulsion comprising as the internal phase at least 90% by weight of the emulsion of water and as the external phase an oil solution containing the vinyl polymerisation system which is activated by heating, the resulting polymerised porous block being dried to remove the water. Preferably the block material is based on styrene with, optionally, a copolymerisable monomer and, preferably, cross-linked with a di-functional monomer such as divinylbenzene. As is explained in US-A-4552953 the initial high internal phase emulsions are prepared by stirring together the aqueous and oil phases and the emulsion viscosity has a clear relationship with the pore or cavity size of cross-linked polymer and with the size of the holes or interconnecting passages between the cavities. Thus by selecting the appropriate stirrer speed and hence viscosity of the emulsion the size of the cavities in the cross-linked polymer can be quite closely controlled.

Suitably the present process includes placing the substantially rigid filter body in a filter carrier. It is to be understood that the present invention extends to the substantially rigid filter bodies made by the present process, a filtration apparatus including one or more of such a substantially rigid filter bodies and use of such apparatus.

Our co-pending application claiming priority from GB 86 07535 relates to an elastic cross-linked porous polymer having a high internal phase volume and inter-connected pores. Although such an elastic material could function as a filter means and could be for example compressed to effect the pore size and hence its filtration characteristics the material being elastic would not retain the deformation.

Embodiments of the present invention will now be described by way of example only with reference to the following Examples.

In the following examples reference is made to the bubble point which is an indication of the change of the filtering pathways in the porous body. The bubble point is the pressure of gas required to displace liquid fully from a wetted sample of the filter material. The liquid can of course be chosen from suitable hydrophilic or hydrophobic liquids, but must be one which will fully wet a material under study. The bubble point (P) is given by the equation:

$$P = \frac{K.4\gamma.\cos\theta}{d}$$

in which:

P = pressure of gas
K = shape factor
$\gamma$ = surface tension
$\theta$ = contact angle
d = pore diameter

The following examples also refer to an apparatus in which each filter body was made and tested. The apparatus included compression means to deform the polymeric body to the desired extent to produce the required filtration characteristics and inlet and outlet means to allow the flow of liquid through the apparatus. The apparatus comprised a filter carrier carrying a rigidly-mounted porous plate adjacent a polymeric filter body, supported on a second porous plate, slidably mounted in the filter carrier. An inlet pipe and an outlet pipe permit a flow of liquid through the apparatus. A pressure rod actuated by a hydraulic ram exerts pressure on the slidably mounted plate via a pressure pad. The ram is formed as a piston in the hydraulic cylinder provided with hydraulic fluid. The upper portion of the filter carrier may be removed from the lower portion by means of crew threads so as to permit alternative polymeric filter bodies to be inserted into the apparatus. The plates holding the polymeric body are provided with heating elements so as to raise the temperature of the polymeric filter body.

### Example 1

A porous, polymeric block material of the type disclosed in US Patent No 4 522 953 and comprising a polystyrene divinyl benzene copolymer, having 90% voids, cross-linked with 10% commercial divinyl benzene and prepared in the presence of 20% of a surfactant based on the monomers was washed free of surfactant with alcohol and tested in the above described apparatus. A disc of the polymer 3.6 mm thick was accurately cut to fit in the filter carrier and was compressed, using the hydraulic cylinder and the pressure pad reacting on the slidably mounted plate, through various stages down to 0.7 mm thickness. Using the bubble point technique described earlier and with ethanol as the wetting liquid and heating the plates to 20°C for the duration of the pressure application the results set out in Table I were obtained. The polymeric body had a glass transition temperature of 98°C.

### Table I

| Original Thickness $a_1$/mm | Thickness After Compression at 20°C $a_2$/mm | $a_1/a_2$ | Bubble Point Kg/cm² |
|---|---|---|---|
| 3.6 | 3.6 | 1.00 | 0.11 |
| 3.6 | 3.2 | 1.12 | 0.12 |
| 3.6 | 1.6 | 2.25 | 0.19 |
| 3.6 | 0.8 | 4.50 | 0.25 |
| 3.6 | 0.7 | 5.14 | 0.39 |

The filtration characteristics of the sample having an $a_1/a_2$ ratio of 2.25 were assessed relative to a sample in the uncompressed state i.e. having an $a_1/a_2$ ratio of 1. Each sample was used as a filter means under identical conditions to filter a model dispersion system containing an admixture of spherical polystyrene latex particles. The admixture of particles contained equal amounts of particles of seven discrete sizes ranging from 0.25μm to 1.5μm in diameter. The number and size distribution of particles passing through each filter were analysed using a combined counting/size distribution technique as described by J.G. Cahill, P.G. Cummins E.J. Staples and L.G. Thompson in "Colloids and Surfaces" 8 189 (1986). The results are given in Table II below in terms of the percentage of particles of each size which were allowed to pass through each filter means.

## Table II

| Particle size (μm) | Per cent particles passed through | |
| --- | --- | --- |
| | $a_1/a_2 = 1$ | $a_1/a_2 = 2.25$ |
| 0.25 | 95-100 | 90 |
| 0.34 | 95-100 | 79 |
| 0.52 | 95-100 | 66 |
| 0.60 | 95-100 | 58 |
| 0.70 | 95-100 | 50 |
| 1.16 | 95-100 | 19 |
| 1.52 | 95-100 | 5 |

### Example 2

A further sample of the polymer filter material used in Example 1 was taken and compressed at various temperatures from below to above the glass transition temperature of the polymer which was 98°C. The results are set out in Table III below:

## Table III

| Original Thickness $a_1$/mm | Thickness After Compression $a_2$/mm | $a_1/a_2$ | Temp of Compression | Bubble Point Kg/cm² |
| --- | --- | --- | --- | --- |
| 3.6 | 1.6 | 2.25 | 20°C | 0.11 |
| 3.2 | 0.8 | 4.00 | 90°C | 0.22 |
| 3.2 | 0.7 | 4.57 | 100°C | 0.57 |
| 3.3 | 0.45 | 7.33 | 110°C | 0.92 |

### Claims

1. A process for the preparation of a porous, polymeric filter body in which a deformable, porous, polymeric body, in which the porosity is in the form of a series of cavities joined by interconecting holes constituting a series of pathways through the body, is deformed characterised by imparting a deformation

4

to the polymeric body so as the change the dimensions of the pathways and the polymeric body itself retaining the deformation so as to form a substantially rigid filter body.

2. A process according to claim 1 wherein the deformation is imparted to the polymeric body with the polymeric body below its glass transition temperature.

3. A process according to claim 1 wherein the deformation is imparted to the polymeric body with the polymeric body at or above its glass transition temperature and the polymeric body is subsequently cooled to below its glass transition temperature whilst constraining the polymeric body in its deformed state.

4. A process according to any one of the preceding claims wherein the deformation is such as to compress the polymeric body in one or more directions.

5. A process according to any one of the preceding claims wherein the polymeric body is deformed to a predetermined shape.

6. A process according to any one of the preceding claims wherein the polymeric body is deformed to a predetermined porosity size range.

7. A process according to any one of the preceding claims wherein the deformable porous polymeric body is a porous homogeneous cross-linked vinyl polymeric block material.

8. A process according to any one of the preceding claims including placing the substantially rigid filter body in a filter carrier.

9. A filtration apparatus including a substantially rigid filter body prepared according to any one of the preceding claims.

10. Use of a filtration apparatus according to claim 9.